# EUROPÄISCHE PATENTSCHRIFT

(11) **EP 4 268 693 B1**
(45) Veröffentlichungstag und Bekanntmachung des Hinweises auf die Patenterteilung: **19.11.2025**
(21) Anmeldenummer: 23169131.2
(22) Anmeldetag: 21.04.2023
(51) Int. Cl.: A47K 3/30, E04B 2/82, C09J 5/04

(54) **VERFAHREN ZUR MONTAGE EINER TRENNWAND AN EINER WAND**
METHOD FOR MOUNTING A PARTITION TO A WALL
PROCÉDÉ DE MONTAGE D'UNE CLOISON SUR UNE PAROI

(30) Priorität: 25.04.2022 AT 502732022
(43) Veröffentlichungstag der Anmeldung: 01.11.2023
(73) Patentinhaber: Artweger GmbH & Co. KG, 4820 Bad Ischl (AT)
(72) Erfinder: Zierler, Wolfgang, 4820 Bad Ischl (AT); Spielbüchler, Robert, 4820 Bad Ischl (AT)
(74) Vertreter: Patentanwälte Pinter & Weiss OG

(56) Entgegenhaltungen:
- DE-U1- 202008 012 393

## Beschreibung

Die gegenständliche Erfindung betrifft ein Verfahren zur Montage einer Trennwand an einer Wand, bei dem ein Trennwandprofil durch Kleben an der Wand befestigt wird und im Trennwandprofil die Trennwand befestigt wird, wobei das Trennwandprofil die Trennwand trägt, und wobei das Trennwandprofil als offenes Profil ausgeführt wird mit einem Steg von dem zumindest ein Flansch absteht, wobei das Trennwandprofil mit dem Steg an die Wand geklebt wird und die Trennwand im Bereich des Flansches am Trennwandprofil befestigt wird, wobei an der dem Flansch abgewandten Seite des Steges über die Länge des Trennwandprofils verteilt zumindest zwei unterschiedliche Klebersysteme angeordnet werden, die beim Anlegen des Trennwandprofils an die Wand mit der Wand in Kontakt kommen, wobei am Steg über die Länge des Trennwandprofils verteilt und beabstandet voneinander zumindest zwei Klebestellen mit einem ersten Klebersystem vorgesehen sind und wobei zumindest über einen Teil der restlichen Länge der dem Flansch abgewandten Seite des Steges ein zweites Klebesystem vorgesehen ist, und das Trennwandprofil mit dem ersten Klebersystem und zweiten Klebersystem an die Wand geklebt wird.

Das Kleben zum Fügen von Bauteilen ist aus dem Stand der Technik bekannt, auch mit Verwendung von unterschiedlichen Klebesystemen. DE 20 2012 103 208 U1 beschreibt beispielsweise die Herstellung eines Schalungsteils, wobei mit einem Sofortkleber ein Bügel an einer Schalungsplatte in kurzer Zeit fixiert wird, während ein anderer Kleber noch aushärtet. Das ermöglicht die weitere Bearbeitung des Schalungsteiles. Einen ähnlichen Ansatz verfolgt die DE 195 01 805 A1, in der eine Seitenwandblechsektion mit einer Profilsektion durch Kleben gefügt wird, wobei ein Klebstoffkörper für eine Anfangsfestigkeit sorgt, die ein Bewegen und Weiterverarbeiten der Seitenwandsektion erlaubt, und die Dauerfestigkeit erst nach dem Aushärten einer zweiten Klebeschicht erreicht wird. Eine zusätzliche äußere Belastung des Sofortklebers oder des Klebstoffkörpers vor dem Erreichen der Endfestigkeit des jeweils weiteren Klebers ist diesen Dokumenten nicht zu entnehmen.

Bei der Montage von Trennwänden in Nassräumen, wie Badezimmer, besteht immer das Problem der Befestigung der Trennwand an einer Wand. Die Trennwand ist beispielsweise eine Duschtrennwand aus Glas, auch aufgesetzt auf einem Badewannenrand. Bisher war es zur Montage einer Trennwand üblich oder notwendig, Bohrungen in der Wand zu machen. Das ist aber einerseits problematisch, weil durch eine Bohrung immer eine Sekundärabdichtung hinter dem Wandbelag durchbohrt wird und damit die Sekundärabdichtung beeinträchtigt und beschädigt wird. Andererseits ist aber auch das Bohren selbst mitunter schwierig, weil aufgrund der verwendeten Wandbeläge, wie Fliesen oder Feinsteinzeug, Spezialbohrer, wie beispielsweise Fliesenbohrer oder Diamantbohrer, verwendet werden müssen. Unter Umstände muss sogar nass gebohrt werden, was den Aufwand für das Anfertigen der Bohrlöcher noch weiter erhöht. Durch das Bohren besteht auch immer die Gefahr, den Wandbelag zu beschädigen. Nicht zuletzt ist das Bohren auch ein zeitaufwendiger Vorgang, weil man beispielsweise für eine Duschtrennwand typischerweise 8-12 Bohrlöcher benötigt, und das Bohren dieser Löcher viel Zeit in Anspruch nimmt.

Daher gibt es bereits Ansätze zur Montage einer Trennwand an einer Wand, insbesondere im Nassbereich, nicht mehr zu bohren, sondern zu kleben. Das ist beispielsweise in der DE 20 2008 012 393 U1, DE 33 09 966 A1 oder EP 216 150 A1 beschrieben. In diesen Beispielen wird ein Adapter oder ein ganzes Profil an die Wand geklebt. Am Adapter kann dann ebenfalls ein Profil befestigt werden. Im Profil kann dann die Trennwand befestigt werden. Bei diesen Systemen wird zum Kleben ein doppelseitiges Klebeband verwendet. Nach dem Anbringen des Adapters mit dem Profil oder direkt des Profils an der Wand, wird das Profil mittels eines zusätzlichen Klebers dauerhaft an der Wand verklebt. Auch die AT 377 814 B zeigt eine solche Befestigung einer Trennwand an einer Wand. Dieses Vorgehen hat den Nachteil, dass die Trennwand erst nach dem vollständigen Aushärten des zusätzlichen Klebers in das Profil eingesetzt werden kann, weil der Wandanschluss vorher nicht tragfähig ist. Das bedingt eine Unterbrechung der Montage, je nach Kleber bis zu einigen Stunden, sodass die Montage nicht in einem Durchgang erfolgen kann. Das ist natürlich nachteilig, weil die Montage in den meisten Fällen sogar auf mehrere Tage (z.B. beim Aushärten über Nacht) aufgeteilt werden muss.

Es ist daher eine Aufgabe der gegenständlichen Erfindung, diese Probleme bei der Montage einer Trennwand mittels Klebens zu beheben und insbesondere eine einfache, durchgehende Montage ohne Unterbrechung zu ermöglichen.

Diese Aufgabe wird erfindungsgemäß dadurch gelöst, dass das erste Klebersystem innerhalb einer Zeitspanne von weniger als 30 Minuten eine Anfangsfestigkeit aufweist durch die das Trennwandprofil als auch die Trennwand getragen und an der Wand gehalten wird, die Trennwand nach Erreichen der Anfangsfestigkeit im Trennwandprofil befestigt wird und das zweite Klebesystem erst nach der Befestigung der Trennwand im Trennwandprofil seine Endfestigkeit erlangt, um der Klebeverbindung zwischen dem Trennwandprofil und der Wand Dauerfestigkeit zu verleihen.

Es wurde erkannt, dass für die Montage eine Anfangsfestigkeit, die in kurzer Zeit erreicht werden kann, ausreichend ist, um die Trennwand an der Wand zu befestigen. Für die Belastung der Klebeverbindung in Verwendung der Trennwand wäre die Anfangsfestigkeit aber nicht ausreichend. Daher wird ein zweites Klebersystem verwendet, dass länger zum Erreichen der Endfestigkeit benötigt, dafür aber eine hinreichende Dauerfestigkeit der Klebeverbindung bewirkt. Die benötigte längere Zeit zum Erreichen der Endfestigkeit des zweiten Klebersystems stört aber die Montage nicht, da die Anfangsfestigkeit des ersten Klebersystems hierfür ausreichend ist. Damit kann eine einfache durchgehende Montage einer Trennwand an einer Wand realisiert werden, was die Montage erheblich erleichtert.

In einer besonders einfachen Ausführung, wird als erstes Klebersystem zumindest einer Klebestelle ein am Steg befestigtes Klebeband mit einer vom Trennwandprofil wegweisenden Klebefläche verwendet, wobei das Klebeband mit der Klebefläche an die Wand geklebt wird. Ein Klebeband erlaubt eine einfache prozesssichere Handhabung des ersten Klebersystems, was die Montage erleichtert.

Wenn um zumindest einen Teil des Umfangs des Klebebandes herum, vorzugsweise um den gesamten Umfang des Klebebandes herum, ein Dichtband angeordnet wird, kann mit dem Dichtband eine Abdichtung oder eine Dampfsperre realisiert werden, um das erste Klebersystem nach der Applikation besser gegen Umwelteinflüsse abzuschotten. Das Dichtband wird hierbei vorzugsweise bereits vorab gemeinsam mit dem Klebeband am Trennwandprofil angebracht.

Die Abschottung kann noch verbessert werden, wenn das Dichtband eine vom Trennwandprofil wegweisende Klebefläche aufweist, mit dem das Dichtband an die Wand geklebt wird.

Mit einem Zweikomponentenkleber als erstes Klebersystem kann die Anfangsfestigkeit besonders gut eingestellt werden. Es ist auch möglich, die Länge der Klebestelle mit dem ersten Klebersystem mit einem Zweikomponentenkleber, gegenüber einem Klebeband, zu reduzieren.

Zur Applikation des Zweikomponentenklebers ist es vorteilhaft, wenn an zumindest einer Klebestelle ein am Steg befestigtes Schalungsklebeband mit einer vom Trennwandprofil wegweisenden Klebefläche und einer zentralen Kleberausnehmung verwendet wird, wobei das Klebeband die Kleberausnehmung über den ganzen Umfang umgibt und das Schalungsklebeband mit der Klebefläche an die Wand geklebt wird und der Zweikomponentenkleber in die Kleberausnehmung gefüllt wird, sodass der Zweikomponentenkleber die Kleberausnehmung zumindest teilweise ausfüllt und in Kontakt mit der Wand gelangt. Das Schalungsklebeband mit der Ausnehmung bildet damit eine Kleberschalung, in der der Zweikomponentenkleber angeordnet wird. Das ermöglich eine saubere sichere Applikation des Zweikomponentenklebers, ohne erforderliche Nacharbeiten, wie das Entfernen von überschüssigen oder ausgetretenen Zweikomponentenkleber von der Wand.

Die Applikation des Zweikomponentenklebers kann noch weiter vereinfacht werden, wenn die Kleberausnehmung bis zum Steg reicht und im Steg eine Füllbohrung angeordnet wird, sodass der Zweikomponentenkleber, nach dem Kleben der Klebefläche des Schalungsklebebandes an die Wand, durch die Füllbohrung in die Kleberausnehmung gefüllt wird.

In diesem Zusammenhang ist es auch vorteilhaft, wenn im Steg eine Überlaufbohrung angeordnet wird und der Zweikomponentenkleber solange über die Füllbohrung in die Kleberausnehmung gefüllt wird, bis der Zweikomponentenkleber an der Überlaufbohrung austritt. Damit kann die Menge an Zweikomponentenkleber sicher dosiert werden, was die sichere Applikation des Zweikomponentenklebers ebenso unterstützt.

In einer anderen Ausführungsform, ist zumindest eine Klebestelle am Steg des Trennwandprofils durch eine Adapterplatte gebildet, die vom Trennwandprofil lösbar ist und die zumindest eine Adapterplatte zuerst mit dem ersten Klebersystem an die Wand geklebt wird und das Trennwandprofil mit dem zweiten Klebersystem nach Erreichen der Anfangsfestigkeit des ersten Klebersystems an der zumindest einen Adapterplatte befestigt wird und die Trennwand im Trennwandprofil befestigt wird. Dabei gelangt auch das zweite Klebersystem in Kontakt mit der Wand. Die Verwendung einer Adapterplatte kann die Anordnung des Trennwandprofils an der Wand ebenso erleichtern.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1 ein Trennwandprofil mit einen ersten und zweiten Klebersystem,
Fig.2 eine an einem an eine Wand geklebten Trennwandprofil befestigte Trennwand,
Fig.3 und 4 ein Schalungsklebeband mit einer Kleberausnehmung zur Aufnahme eines Zweikomponentenkleber zur Ausbildung eines ersten Klebersystem,
Fig.5 eine Klebeband zur Ausbildung eines ersten Klebersystem,
Fig.6 ein Dichtband, dass ein Klebeband zur Ausbildung eines ersten Klebersystem umgibt,
Fig.7 ein Trennwandprofil mit einer Adapterplatte zur Ausbildung einer Klebestelle und
Fig.8 eine Adapterplatte mit einem Schalungsklebeband und einer zentralen Kleberausnehmung zur Aufnahme eines Zweikomponentenkleber zur Ausbildung eines ersten Klebersystem.

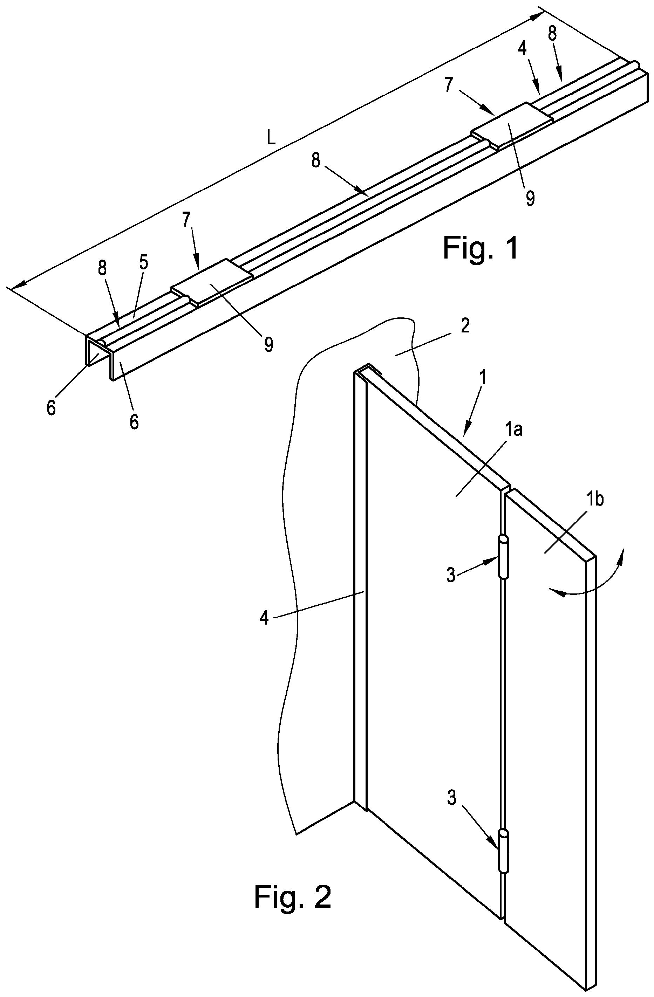

Das erfindungsgemäße Montageverfahren einer Trennwand 1 an einer ortsfesten Wand 2 wird mit Bezugnahme auf die Fig.1 und 2 erläutert.

Unter Trennwand 1 wird sowohl ein nicht beweglicher Bauteil 1a verstanden, wie beispielsweise eine fixe Glaswand, aber auch ein beweglicher Bauteil 1b, wie beispielsweise ein Flügel einer Drehtüre, beispielsweise aus Glas, als auch eine Mischung aus einem nicht beweglichen Bauteil 1a und einem beweglichen Bauteil 1b (wie in Fig.2 dargestellt). Solche Anordnungen kommen insbesondere in Nassräumen als Duschabtrennungen vor, wobei der nicht bewegliche Bauteil 1a und der bewegliche Bauteil 1b oftmals aus Glas gefertigt sind. Der bewegliche Bauteil 1b ist in der Regel über Scharniere 3 an einem nicht beweglichen Bauteil 1a, oder auch am Trennwandprofil 4 direkt, beweglich, üblicherweise schwenkbar, angeordnet. Im Falle einer gemischten Anordnung ist der beweglich Bauteil 1b am nicht beweglichen Bauteil 1a beweglich befestigt und der nicht beweglich Bauteil 1a am Trennwandprofil 4 befestigt.

Zur Befestigung der Trennwand 1 ist ein Trennwandprofil 4 vorgesehen. Das Trennwandprofil 4 ist ein offenes Profil, beispielsweise ein Aluminiumprofil, mit einem Steg 5 und zumindest einem Flansch 6, der vom Steg 5 absteht. In Verwendung des Trennwandprofils 4 steht der zumindest eine Flansch 6 von der Wand 2 abgewandt vom Steg 5 ab. Der Steg 5 und der zumindest eine Flansch 6 sind üblicherweise rechtwinkelig zueinander angeordnet. Im Ausführungsbeispiel der Figuren 1 und 2, und vorzugsweise, ist das Trennwandprofil 4 mit einem U-förmigen Querschnitt ausgeführt, mit zwei abstehenden Flanschen 6 und einem Steg 5, kann aber auch anders ausgeführt sein, beispielsweise als L-Profil oder U-Profil mit unterschiedlich langen Flanschen 6 oder mit einem Flansch 6, der nicht rechtwinkelig absteht.

Das Trennwandprofil 4 wird an der Wand 2 befestigt und die Trennwand 1 wird im Trennwandprofil 4 befestigt. Das Trennwandprofil 4 trägt in Verwendung die Trennwand 1 zur Gänze, muss also in der Lage sein, die gesamte Gewichtskraft der Trennwand 1 aufnehmen, und auch aufgrund der Gewichtskraft hervorgerufene Momente. In bestimmten Anwendungen ist an der unteren Kante der Trennwand 1 oftmals auch ein Kunststoffdichtprofil angeordnet, das in Verwendung der Trennwand 1 am Boden aufliegt. Ein solches Kunststoffdichtprofil ist aber nicht dazu geeignet, eine Gewichtskraft der Trennwand 1 aufzunehmen, sodass auch in diesem Fall, das Trennwandprofil 4 in der Lage sein muss, die gesamte Gewichtskraft und allfällige Momente aufzunehmen.

Wie die Trennwand 1 im Trennwandprofil 4 befestigt wird, beispielsweise durch Klemmen, Schrauben usw., spielt für die Erfindung keine Rolle. Das Trennwandprofil 4 wird erfindungsgemäß aber durch Kleben an der Wand 2 befestigt. Die Klebeverbindung muss daher in Verwendung die gesamte Gewichtskraft der Trennwand 1 und allfällige davon hervorgerufene Momente aufnehmen.

Zum Kleben des Trennwandprofils 4 an der Wand 2 sind an der dem zumindest einen Flansch 6 abgewandten Seite des Steges 5, also an der Rückseite des Trennwandprofils 4, über die Länge des Trennwandprofils 4 verteilt zumindest zwei unterschiedliche Klebersysteme 7, 8 angeordnet. Die beiden Klebersystem 7, 8 kommen beim Anlegen des Trennwandprofils 4 an die Wand 2 mit der Wand 2 in Kontakt. Über die Länge L des Trennwandprofils 4 verteilt und beabstandet voneinander sind zumindest zwei Klebestellen 9 mit einem ersten Klebersystem 7 vorgesehen. Über zumindest einen Teil der restlichen Länge der dem zumindest einen Flansch 6 abgewandten Seite des Steges 5 ist ein zweites Klebersystem 8 vorgesehen. Im Ausführungsbeispiel der Fig.1, und vorzugsweise, ist das zweite Klebesystem 8 über die ganze restliche Länge des Steges 5 angeordnet.

Vorzugsweise nehmen die zumindest zwei Klebestellen 9 maximal 20% der Länge L des Trennwandprofils 4 ein. Vorzugsweise über die restliche Länge des Trennwandprofils 4 (also (100-20%)) ist das zweite Klebersystem 8 aufgetragen. Bei einer typischen Länge L des Trennwandprofils 4 von 1.950mm wären die Klebestellen 9 damit maximal 390mm, die beispielsweise auf zwei Klebestellen 9 zu je 195mm oder drei Klebestellen zu je 130mm aufgeteilt sein könnten.

Das erste Klebersystem 7 ist ausgeführt, innerhalb einer Zeitspanne von weniger als 30 Minuten, vorzugsweise weniger als 10 Minuten, besonders vorzugsweise sofort, eine Anfangsfestigkeit zu erreichen. Das erste Klebersystem 7 ist beispielsweise als Klebeband ausgeführt mit einer vom Trennwandprofil 4 wegweisenden (und damit in Verwendung zur Wand 2 gerichteten) Klebefläche. Das erste Klebersystem 7 kann aber auch als Zweikompontenkleber ausgeführt sein, der rasch (< 30 Minuten) abhärtet. Im Falle eines Klebebandes kann die Anfangsfestigkeit sofort erreicht werden und im Falle eines Zweikomponentenklebers nach dessen Aushärten.

Die Anfangsfestigkeit bezeichnet hierin die Festigkeit, die die Verklebung unmittelbar nach dem Fügen der Fügeteile (Wand 2 und Teil des Trennwandprofil 4 mit dem ersten Klebersystem 7) hat. Wobei unter "unmittelbar" in diesem Zusammenhang eine Zeitspanne von maximal 30 Minuten, vorzugsweise weniger als 10 Minuten, besonders vorzugsweise sofort, verstanden wird.

Die Anfangsfestigkeit des ersten Klebersystems 7 ist so gewählt, dass das Trennwandprofil 4 als auch die im oder am Trennwandprofil 4 angeordnete Trennwand 1 alleine durch diese Anfangsfestigkeit des ersten Klebersystems 7 getragen und an der Wand 2 gehalten wird.

Die Trennwand 1 kann damit schon nach kurzer Zeit (nach Erreichen der Anfangsfestigkeit), vorzugsweise sofort, im Trennwandprofil 4 befestigt werden. Es ist damit keine oder nur eine sehr kurze Unterbrechung der Montage der Trennwand 1 erforderlich. In der kurzen Unterbrechungszeit können beispielsweise andere, notwendige Tätigkeit durchgeführt werden, sodass die Montagearbeiten nicht oder kaum gestört werden.

Das zweite Klebersystem 8 ist so gewählt, dass es erst nach der Befestigung der Trennwand 1 im Trennwandprofil 4 seine Endfestigkeit erlangt, um der Klebeverbindung zwischen dem Trennwandprofil 4 und der Wand 2 Dauerfestigkeit zu verleihen. Unter Dauerfestigkeit wird hierin eine hinreichend lange statische und/oder dynamische Festigkeit der Klebeverbindung über die zu erwartende Betriebsdauer der Trennwand 1 verstanden. Damit kann die Klebeverbindung, insbesondere das zweite Klebersystem 8, das Trennwandprofil 4 mit der daran befestigen Trennwand 1 dauerhaft, also über die zu erwartende Betriebsdauer, sicher an der Wand 2 halten.

Im Bereich einer Dusche wird die Klebeverbindung beispielsweise durch die Umgebungsbedingungen, wie Feuchtigkeit und Temperaturschwankungen, laufend belastet, was für die statische Festigkeit maßgebend sein kann. Ist die Trennwand 1 mit einem beweglichen Trennwandteil 1b ausgeführt, kommen noch dynamische Kraftwechsel durch die Bewegung des beweglichen Trennwandteil 1b hinzu, die die Kleberverbindung zusätzlich belasten, was für die dynamische Festigkeit maßgebend sein kann. Zudem kommen noch Belastungen der Klebeverbindung hinzu, die aus der unterschiedlichen Wärmeausdehnung der Wand 2 und des Trennwandprofils 4 herrühren, auch das kann für die statische Festigkeit maßgebend sein. Solche Einflüsse beeinflussen die Dauerfestigkeit der Klebeverbindung. Das verdeutlicht auch, dass eine Klebeverbindung einer Trennwand 1 an einer Wand 2 keine triviale Angelegenheit ist.

Als Kleber für das zweite Klebersystem 8 wird daher vorzugsweise ein Einkomponentenkleber gewählt, der im Endzustand (nach dem Aushärten) elastischer ist, als ein Zweikomponentenkleber im Endzustand (nach dem Aushärten). Damit hält ein Einkomponentenkleber allfälligen Stoßbelastungen der Klebeverbindung, beispielsweise durch die Bewegung des beweglichen Trennwandteils 1b, besser stand. Auch hinsichtlich der unterschiedlichen Wärmeausdehnungen der Wand 2 und des Trennwandprofils 4 ist ein elastischerer Kleber von Vorteil. Abgesehen davon ist ein Einkomponentenkleber auch in der Anwendung deutlich einfacher zu handhaben, beispielsweise weil keine Komponenten gemischt werden müssen, und ist auch billiger als ein Zweikomponentenkleber. Daher wird für das zweite Klebersystem 8 vorzugsweise kein Zweikomponentenkleber gewählt. Der Nachteil des Einkomponentenklebers liegt in der niedrigen Anfangsfestigkeit bzw. in der langen Zeitdauer bis zum Abhärten und Erreichen der Endfestigkeit. Dieser Nachteil wird durch die Eigenschaften des Klebers des ersten Klebersystems 7 ausgeglichen.

Der Kleber des zweiten Klebersystems 8 kann beispielsweise einfach unmittelbar vor der Verwendung mittels einer Spritzkartusche und einer Kartuschenpresse auf die Rückseite des Trennwandprofils 4 aufgetragen werden. Die Kleberraupe wird dabei über die gewünschte Länge des Steges 5 aufgetragen, wobei die Klebestellen 9 mit dem ersten Klebersystem 7 ausgespart werden.

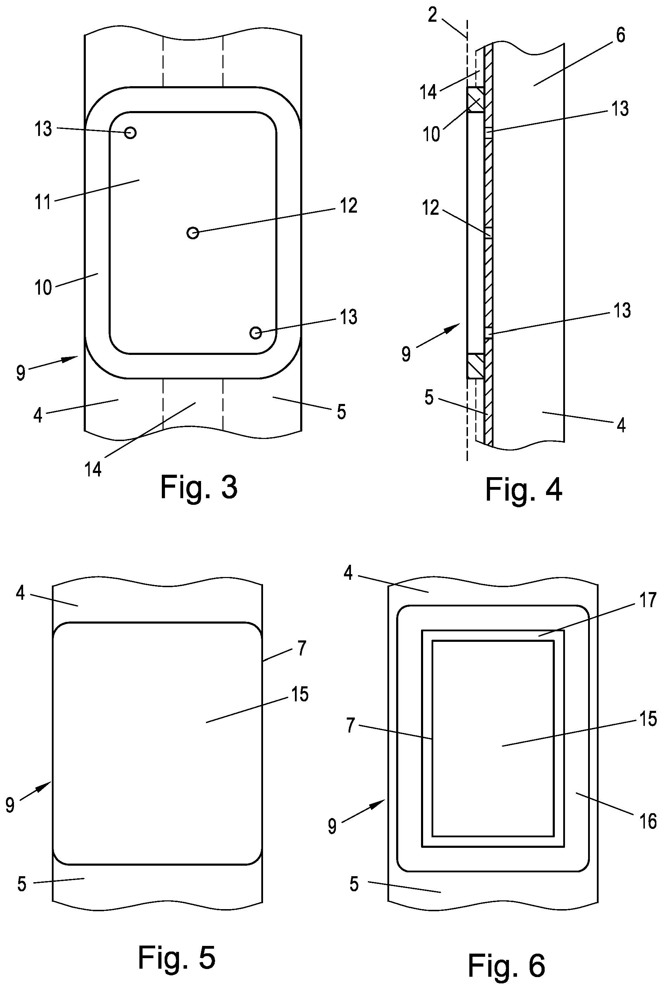

Hierfür kann am Steg 5 im Profil auch eine sich über die für das zweite Klebersystem 8 vorgesehene Länge des Trennwandprofils 4 erstreckende Nut 14 (in Fig.3 gestrichelt angedeutet) vorgesehen sein, die als Führung der Spritzkartusche dienen kann, was den Auftrag des zweiten Klebersystems 8 erleichtert.

Der Fachmann ist natürlich in der Lage ein geeignetes erstes Klebersystem 7 und zweites Klebersystem 8 auszuwählen, um die benötigte Anfangsfestigkeit und Dauerfestigkeit zu erzielen.

Eine mögliche Ausführung einer Klebestelle 9 für das erste Klebersystem 7 wird mit Bezugnahme auf die Fig.3 und 4 erläutert.

Die Fig.3 zeigt einen Abschnitt der Rückseite des Trennwandprofils 4 mit dem Steg 5 und einer Klebestelle 9 und Fig.4 einen Längsschnitt durch diese Klebestelle 9. Die Klebestelle 9 wird durch ein Schalungsklebeband 10 gebildet, das eine zentrale Kleberausnehmung 11 aufweist. Das Schalungsklebeband 10 umgibt die zentrale Kleberausnehmung 11 vollständig. Die zentrale Kleberausnehmung 11 geht durch das Schalungsklebeband 10 durch und reicht damit bis zum Steg 5 des Trennwandprofils 4. Das Schalungsklebeband 10 bildet damit eine Kleberschalung für einen Zweikomponentenkleber als erstes Klebersystem 7, der in der Kleberausnehmung 11 angeordnet wird. Das Schalungsklebeband 10 hat auf der dem Trennwandprofil 4 abgewandten Seite (und damit in Verwendung des Trennwandprofils 4 zur Wand 2 gerichtet) eine Klebefläche, mittels der das Trennwandprofil 4 provisorisch an der Wand 2 angeordnet wird bis der Zweikomponentenkleber in der Kleberausnehmung 11 ausgehärtet ist.

Der Zweikomponentenkleber kann vor Verwendung des Trennwandprofils 4 in die Kleberausnehmung 11 gefüllt werden. In einer anderen Ausführung ist im Bereich der Kleberausnehmung 11 im Steg 5 eine durch den Steg 5 durchgehende Füllbohrung 12 vorgesehen, sodass die Kleberausnehmung 11 nach der Anordnung des Trennwandprofils 4 an der Wand, und nach dem provisorischen Fixieren mittels des Schalungsklebebands 10, über die Füllbohrung 12 zugänglich bleibt. Der Zweikomponentenkleber kann dann über die gegenüberliegende Seite des Steges 5 in die Kleberausnehmung 11 gepresst werden. Hierzu kann im Bereich der Kleberausnehmung 11 zumindest eine durch den Steg 5 durchgehende Überlaufbohrung 13 vorgesehen sein, damit die Luft, die der in die Kleberausnehmung 11 gepresste Zweikomponentenkleber verdrängt, entweichen kann. Abgesehen davon, kann der Füllvorgang des Zweikomponentenklebers damit besser überwacht werden. Tritt über die Überlaufbohrung 13 Zweikomponentenkleber aus der Kleberausnehmung 11 aus, kann auf ein fertiges Füllen der Kleberausnehmung 11 mit Zweikomponentenkleber geschlossen werden.

Fig.5 zeigt eine Ausführung einer Klebestelle 9 mit einem Klebeband 15 als erstes Klebersystem 7. In dieser Ausführung mit Klebeband 15 wird die Anfangsfestigkeit sofort nach Anlegen, und gegebenenfalls Andrücken, des Trennwandprofils 4 an der Wand 2 erreicht. Das Klebeband 15 ist vorzugsweise auf der Rückseite des Trennwandprofils 4 auf den Steg 5 des Trennwandprofils 4 aufgeklebt, und ist in dieser Ausführung als doppelseitiges Klebeband ausgeführt. Die zum Kleben des Trennwandprofils 4 an die Wand 2 vorgesehene Klebefläche des Klebebandes 15 ist in Verwendung des Trennwandprofils 4 zur Wand 2 gerichtet.

In Fig.6 ist eine weitere Ausführung einer Klebestelle 9 mit einem Klebeband 15 gezeigt. In dieser Ausführungsform ist das Klebeband 15, das das erste Klebersystem 7 ausbildet, in einer zentralen Ausnehmung 17 eines Dichtbandes 16 angeordnet. Das Dichtband 16 umgibt damit das Klebeband 15 vorzugsweise vollumfänglich. Das Dichtband 16 kann aber auch nur an gewissen Seiten des Klebebandes 15 vorgesehen sein. Das Dichtband 16 kann aus Acrylatschaum gefertigt sein und kann als Dampfsperre dienen. Das Dichtband 16 dichtet das Klebeband 15 daher gegenüber Feuchtigkeit ab, womit das erste Klebersystem 7 weniger durch Feuchtigkeit belastet wird. Das Dichtband 16 hat vorzugsweise eine etwas größere Höhe als das Klebeband 15, beispielsweise eine um 0,1 bis 0,3mm größere Höhe, damit das Dichtband 16 in Verwendung etwas komprimiert wird, was dessen Wirkung verbessert. Das Dichtband 16 kann auch an der dem Steg 5 abgewandten Seite eine Klebefläche aufweisen. In diesem Fall könnte das Dichtband 16 als doppelseitiges Acrylatschaum-Klebeband ausgeführt sein. Die Ausnehmung 17 kann aus dem Dichtband 16 ausgestanzt werden.

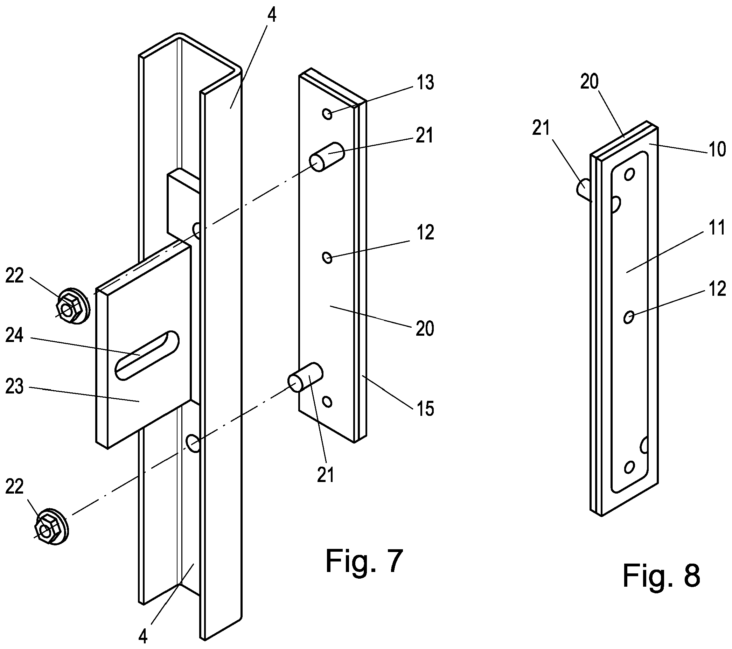

Eine Klebestelle 9 am Steg 5 des Trennwandprofils 4 kann aber auch lösbar vom Trennwandprofil 4 ausgeführt sein, wie mit Bezugnahme auf die Fig.7 und 8 erläutert wird.

In einer solchen Ausführung ist eine Adapterplatte 20 vorgesehen, die die Klebestelle 9 für das erste Klebersystem 7 ausbildet. Die Adapterplatte 20 ist lösbar mit dem Trennwandprofil 4 verbunden. Die Adapterplatte 20 liegt bei Verwendung beispielsweise mit einer ersten Adapterfläche am Steg 5 an der Rückseite des Trennwandprofils 4 an. An der gegenüberliegenden Adapterfläche ist das erste Klebersystem 7 ausgebildet, beispielsweise wie oben mit Bezugnahme auf eine der Figuren 3 und 4, 5 oder 6 beschrieben.

In der Ausführung nach Fig.7 ist ein Klebeband 15, wie in Fig.5 oder 6 beschrieben, als erstes Klebersystem 7 vorgesehen, mit einer vom Trennwandprofil 4 wegweisenden (und damit in Verwendung zur Wand 2 gerichteten) Klebefläche. Oder ein Schalungsklebeband 10 bildet, wie in Fig.8 dargestellt, in einer bevorzugten Ausführung eine Kleberschalung für einen Zweikomponentenkleber aus, der in einer Kleberausnehmung 11 gefüllt wird, so wie mit Bezugnahme auf die Fig.3 und 4 beschrieben.

Die Adapterplatte 20 ist in der Ausführung nach Fig.7 und 8 rückseitig auf das Trennwandprofil 4 geschraubt. Hierfür stehen an der dem Trennwandprofil 4 zugewandten Adapterfläche Gewindestangen 21 ab, die durch den Steg 5 des Trennwandprofils 4 durchreichen, um die Adapterplatte 20 mittels Muttern 22 von der gegenüberliegenden Seite des Steges 5 an das Trennwandprofil 4 zu schrauben.

Über die Länge des Trennwandprofils 4 können mehrere Adapterplatten 20 angeordnet sein, vorzugsweise an jeder vorgesehenen Klebestelle 9 für das erste Klebersystem 7.

Bei Verwendung eines Klebebandes 15 als erstes Klebersystem 7 ist es zudem allgemein in allen Ausführungsformen vorteilhaft, wenn die für die Befestigung an der Wand 2 vorgesehene Klebefläche des Klebebandes 15 vor Verwendung in bekannter Weise von einem nicht klebenden Abziehband bedeckt ist. Zur Verwendung wird das Abziehband abgezogen, um die Klebefläche des Klebebandes 15 freizulegen. Ein solches Abziehband kann auch für das Schalungsklebeband 10 zur Ausbildung einer Kleberschalung oder für das Dichtband 16 vorgesehen sein. Auch ein gemeinsames Abziehband für alle verwendeten Klebeflächen ist natürlich möglich.

Im Bereich der Adapterplatte 20 ist in der Ausführung nach Fig.7 auch ein vom Trennwandprofil 4 abstehendes Halteteil 23 für die Trennwand 1 angeordnet.

Im vom Trennwandprofil 4 abstehenden Teil des Halteteils 24 ist in der gezeigten Ausführungsform ein Langloch 24 angeordnet, wobei sich das Langloch 24 normal auf das Trennwandprofil 4 erstreckt. Das ermöglicht einen gewissen Ausgleich einer Unebenheit der Wand 2, an der das Trennwandprofil 4 befestigt wird. Auch wenn das Trennwandprofil 4 aufgrund einer Unebenheit der Wand 2 bei der Montage verbogen wird, kann daran einfach und sicher die Trennwand 1 angeordnet werden, weil über das Langloch 24 ein Ausgleich möglich ist. Die Trennwand 1 wird dazu über das Langloch 24 mit dem Trennwandprofil 4 verbunden, beispielsweise mittels Schrauben, die durch das Langloch 24 gesteckt werden.

Bei Verwendung eines Trennwandprofils 4 mit Adapterplatten 20 läuft die Montage der Trennwand 1 vorteilhaft wie folgt ab.

Das erste Klebersystem 7 ist hierbei gemäß der Fig.3 und 4 ausgeführt. Das Trennwandprofil 4 wird zuerst mittels des Schalungsklebebandes 10 an den Adapterplatten 20 provisorisch an die Wand 2 geklebt. Danach wird das Trennwandprofil 4 von den Adapterplatten 20 gelöst, beispielsweise indem die Muttern 22 von den Gewindestangen 21 geschraubt werden und das Trennwandprofil 4 von den Adapterplatten 20 abgehoben wird. Damit haben die Adapterplatten 20 an der Wand 2 eine definierte Position. Nun kann der Zweikomponentenkleber als erstes Klebersystem 7 über die Füllbohrung 12 in die Kleberausnehmung 11 gefüllt werden, beispielsweise bis der Zweikomponentenkleber an der Überlaufbohrung 13 austritt. Alternativ wird die Adapterplatte 20 über ein Klebeband 15 als erstes Klebersystem 7 an die Wand 2 geklebt. Am Trennwandprofil 4 wird das zweite Klebersystem 8 in der gewünschten Länge angeordnet, beispielsweise mit einer Spritzkartusche und einer Kartuschenpresse am Trennwandprofil 4 aufgetragen. Nach dem Erreichen der Anfangsfestigkeit des ersten Klebersystem 7, beispielsweise nach dem Aushärten des Zweikomponentenklebers, wird das Trennwandprofil 4 wieder an den Adapterplatten 20 befestigt, wobei das zweite Klebersystem 8 in Kontakt mit der Wand 2 gelangt. Danach kann sofort mit der Montage der Trennwand 1 im Trennwandprofil 4 fortgesetzt werden, weil die Anfangsfestigkeit das ersten Klebersystems 7 ausreicht, um das Trennwandprofil 4 und die Trennwand 1 sicher an der Wand 2 zu halten.

Bei Verwendung eines Trennwandprofils 4 ohne Adapterplatten 20 läuft die Montage der Trennwand 1 vorteilhaft wie folgt ab.

Das erste Klebersystem 7 ist hierbei gemäß der Fig.5 oder 6 ausgeführt. An den Klebestellen 9 des Trennwandprofils 4 ist bereits ein Klebeband 15 zur Ausbildung des ersten Klebersystems 7 angeordnet. Am Trennwandprofil 4 wird das zweite Klebersystem 8 in der gewünschten Länge angeordnet, beispielsweise mit einer Spritzkartusche und einer Kartuschenpresse am Trennwandprofil 4 aufgetragen. Gegebenenfalls wird auch eine Abziehfolie von den Klebestellen 9 abgezogen, um die Klebeflächen der Klebebänder 15 freizulegen. Das Trennwandprofil 4 wird nun mittels der Klebebänder 15 an die Wand geklebt, wobei auch das zweite Klebersystem 8 in Kontakt mit der Wand gelangt. Die Anfangsfestigkeit des ersten Klebersystems 7 wird damit unmittelbar erlangt und es kann sofort mit der Montage der Trennwand 1 fortgesetzt werden.

Ein weiterer Vorteil der erfindungsgemäßen Montage einer Trennwand 1 an einer Wand 2 liegt darin, dass das zweite Klebersystem 8, wenn es über die gesamte Länge des Trennwandprofils 4 (ausgenommen der Klebestellen 9) aufgetragen ist, bereits eine Abdichtung zwischen der Wand 2 und dem Trennwandprofil 4 ausbildet. Damit muss auch im Bereich einer Dusche, keine weitere Abdichtung, beispielsweise als wartungsaufwendige Silikonfuge, mehr vorgesehen werden.

Das Kleben des Trennwandprofils 4 an eine Wand 2 wie oben mit Bezugnahme auf die Figuren beschrieben wurde, kann auch zum Kleben anderer Komponenten verwendet werden. Bei Duschwänden aus Glas ist es üblich sogenannte Stabilisatoren zu verwenden, die die Trennwand 1, üblicherweise am oberen Rand, halten, um Schwingungen zu vermeiden. Die Befestigung der Stabilisatorhalterung des Stabilisators an der Wand 2 könnte so wie für die Adapterplatte 20 beschrieben durchgeführt werden, also mit einem ersten Klebersystem 7 wie mit Bezugnahme auf die Figuren 3 bis 8 beschrieben. In diesem Fall wäre natürlich kein zusätzliches zweites Klebersystem 8 erforderlich, könnte aber ebenso vorgesehen sein.

Die Adapterplatte 20 könnte aber auch unabhängig vom Trennwandprofil 4 verwendet werden, beispielsweise um über eine Adapterplatte 20 einen im oberen Bereich eines nicht beweglichen Bauteils 1a der Trennwand 1 angreifenden Stabilisators an der Wand 2 zu befestigen oder zur Befestigung für Accessoires, wie z.B. Haltestangen für Handbrausen, Duschmittelkörbe usw.

Die Adapterplatte 20 ist vorzugsweise aus einem klebeprozesssicheren Material, wie beispielsweise Edelstahl oder einem luftdurchlässigen Sintermaterial, hergestellt.

Selbstverständlich kann, wie hinlänglich bekannt, jede Oberfläche, an der geklebt wird, vor dem Kleben auch in geeigneter Weise gereinigt werden, um die Haftung zu verbessern. Gleichfalls ist es denkbar die Oberfläche der Wand 2, an der geklebt wird, auch mit einem Haftvermittler (Primer) vorzubehandeln, um die Haftung zu verbessern.

## Patentansprüche

1. Verfahren zur Montage einer Trennwand (1) an einer Wand (2), bei dem ein Trennwandprofil (4) durch Kleben an der Wand (2) befestigt wird und im Trennwandprofil (4) die Trennwand (1) befestigt wird, wobei das Trennwandprofil (4) die Trennwand (1) trägt, und wobei das Trennwandprofil (4) als offenes Profil ausgeführt wird mit einem Steg (5) von dem zumindest ein Flansch (6) absteht, wobei das Trennwandprofil (4) mit dem Steg (5) an die Wand (2) geklebt wird und die Trennwand (1) im Bereich des Flansches (6) am Trennwandprofil (4) befestigt wird, wobei an der dem Flansch (6) abgewandten Seite des Steges (5) über die Länge (L) des Trennwandprofils (4) verteilt zumindest zwei unterschiedliche Klebersysteme angeordnet werden, die beim Anlegen des Trennwandprofils (4) an die Wand (2) mit der Wand (2) in Kontakt kommen, wobei am Steg (5) über die Länge (L) des Trennwandprofils (4) verteilt und beabstandet voneinander zumindest zwei Klebestellen (9) mit einem ersten Klebersystem (7) vorgesehen sind und wobei zumindest über einen Teil der restlichen Länge der dem Flansch (6) abgewandten Seite des Steges (5) ein zweites Klebesystem (8) vorgesehen ist, und das Trennwandprofil (4) mit dem ersten Klebersystem (7) und zweiten Klebersystem (8) an die Wand (2) geklebt wird, **dadurch gekennzeichnet, dass** das erste Klebersystem (7) innerhalb einer Zeitspanne von weniger als 30 Minuten, vorzugsweise weniger als 10 Minuten, besonders vorzugsweise sofort, eine Anfangsfestigkeit aufweist durch die das Trennwandprofil (4) als auch die Trennwand (1) getragen und an der Wand (2) gehalten wird, die Trennwand (1) nach Erreichen der Anfangsfestigkeit im Trennwandprofil (4) befestigt wird und das zweite Klebesystem (8) erst nach der Befestigung der Trennwand (1) im Trennwandprofil (4) seine Endfestigkeit erlangt, um der Klebeverbindung zwischen dem Trennwandprofil (4) und der Wand (2) Dauerfestigkeit zu verleihen.

2. Verfahren nach Anspruch 1, **dadurch gekennzeichnet, dass** als erstes Klebersystem (7) zumindest einer Klebestelle (9) ein am Steg (5) befestigtes Klebeband (15) mit einer vom Trennwandprofil (4) wegweisenden Klebefläche verwendet wird, wobei das Klebeband (15) mit der Klebefläche an die Wand (2) geklebt wird.

3. Verfahren nach Anspruch 2, **dadurch gekennzeichnet, dass** um zumindest einen Teil des Umfangs des Klebebandes (15) herum, vorzugsweise um den gesamten Umfang des Klebebandes (15) herum, ein Dichtband (16) angeordnet wird.

4. Verfahren nach Anspruch 3, **dadurch gekennzeichnet, dass** das Dichtband (16) eine vom Trennwandprofil (4) wegweisende Klebefläche aufweist, mit dem das Dichtband (16) an die Wand (2) geklebt wird.

5. Verfahren nach Anspruch 1, **dadurch gekennzeichnet, dass** das erste Klebersystem (7) zumindest einer Klebestelle (9) als Zweikomponentenkleber ausgeführt ist.

6. Verfahren nach Anspruch 5, **dadurch gekennzeichnet, dass** an zumindest einer Klebestelle (9) ein am Steg (5) befestigtes Schalungsklebeband (10) mit einer vom Trennwandprofil (4) wegweisenden Klebefläche und einer zentralen Kleberausnehmung (11) verwendet wird, wobei das Schalungsklebeband (10) die Kleberausnehmung (11) über den ganzen Umfang umgibt und das Schalungsklebeband (10) mit der Klebefläche an die Wand (2) geklebt wird und der Zweikomponentenkleber in die Kleberausnehmung (11) gefüllt wird, sodass der Zweikomponentenkleber die Kleberausnehmung (11) zumindest teilweise ausfüllt und in Kontakt mit der Wand (2) gelangt.

7. Verfahren nach Anspruch 6, **dadurch gekennzeichnet, dass** die Kleberausnehmung (11) bis zum Steg (5) reicht und im Steg (5) eine Füllbohrung (12) angeordnet wird, und der Zweikomponentenkleber, nach dem Kleben der Klebefläche des Schalungsklebebandes (10) an die Wand (2), durch die Füllbohrung in die Kleberausnehmung (11) gefüllt wird.

8. Verfahren nach Anspruch 7, **dadurch gekennzeichnet, dass** im Steg (5) zumindest eine Überlaufbohrung (13) angeordnet wird und der Zweikomponentenkleber solange über die Füllbohrung (12) in die Kleberausnehmung (11) gefüllt wird, bis der Zweikomponentenkleber an der Überlaufbohrung (13) austritt.

9. Verfahren nach einem der Ansprüche 1 bis 8, **dadurch gekennzeichnet, dass** zumindest eine Klebestelle (9) am Steg (5) des Trennwandprofils (4) durch eine Adapterplatte (20) gebildet wird, die vom Trennwandprofil (4) lösbar ist und die zumindest eine Adapterplatte (20) zuerst mit dem ersten Klebersystem (7) an die Wand (2) geklebt wird und das Trennwandprofil (4) mit dem zweiten Klebersystem (8) nach Erreichen der Anfangsfestigkeit des ersten Klebersystems (7) an der zumindest einen Adapterplatte (20) befestigt wird und die Trennwand (1) im Trennwandprofil (4) befestigt wird.

## Claims

1. Method for mounting a partition (1) on a wall (2), in which a partition profile (4) is fastened to the wall (2) by adhesive bonding and the partition (1) is fastened in the partition profile (4), wherein the partition profile (4) supports the partition (1), and wherein the partition profile (4) is designed as an open profile having a web (5) from which at least one flange (6) projects, wherein the partition profile (4) is adhesively bonded to the wall (2) by the web (5), and the partition (1) is fastened to the partition profile (4) in the region of the flange (6), wherein at least two different adhesive systems are arranged on the side of the web (5) facing away from the flange (6) so as to be distributed over the length (L) of the partition profile (4), which adhesive systems come into contact with the wall (2) when the partition profile (4) is placed against the wall (2), wherein at least two adhesive locations (9) having a first adhesive system (7) are provided on the web (5) so as to be distributed over the length (L) of the partition profile (4) and spaced apart from one another, and wherein a second adhesive system (8) is provided over at least part of the remaining length of the side of the web (5) facing away from the flange (6), and the partition profile (4) is adhesively bonded to the wall (2) by the first adhesive system (7) and the second adhesive system **(8),characterized in that** the first adhesive system (7) has an initial strength within a period of less than 30 minutes, preferably less than 10 minutes, particularly preferably immediately, by means of which the partition profile (4) and the partition (1) are supported and held on the wall (2), the partition (1) is fastened in the partition profile (4) after the initial strength has been reached, and the second adhesive system (8) only achieves its final strength after the partition (1) has been fastened in the partition profile (4), in order to provide the adhesive bond between the partition profile (4) and the wall (2) with fatigue strength.

2. Method according to claim 1, **characterized in that** an adhesive tape (15) which is fastened to the web (5) and has an adhesive surface facing away from the partition profile (4) is used as the first adhesive system (7) of at least one adhesive location (9), wherein the adhesive tape (15) is adhesively bonded to the wall (2) by the adhesive surface.

3. Method according to claim 2, **characterized in that** a sealing tape (16) is arranged around at least part of the periphery of the adhesive tape (15), preferably around the entire periphery of the adhesive tape (15).

4. Method according to claim 3, **characterized in that** the sealing tape (16) has an adhesive surface facing away from the partition profile (4), by means of which the sealing tape (16) is adhesively bonded to the wall (2).

5. Method according to claim 1, **characterized in that** the first adhesive system (7) of at least one adhesive location (9) is designed as a two-component adhesive.

6. Method according to claim 5, **characterized in that** at at least one adhesive location (9), a formwork adhesive tape (10) is used which is fastened to the web (5) and has an adhesive surface facing away from the partition profile (4) and a central adhesive recess (11), wherein the formwork adhesive tape (10) surrounds the adhesive recess (11) over the entire periphery thereof and the formwork adhesive tape (10) is adhesively bonded to the wall (2) by the adhesive surface, and the two-component adhesive is filled into the adhesive recess (11), such that the two-component adhesive at least partially fills the adhesive recess (11) and comes into contact with the wall (2).

7. Method according to claim 6, **characterized in that** the adhesive recess (11) extends as far as the web (5) and a filling hole (12) is arranged in the web (5), and the two-component adhesive is filled through the filling hole into the adhesive recess (11) after the adhesive surface of the formwork adhesive tape (10) has been adhesively bonded to the wall (2).

8. Method according to claim 7, **characterized in that** at least one overflow hole (13) is arranged in the web (5), and the two-component adhesive is filled into the adhesive recess (11) via the filling hole (12) until the two-component adhesive emerges at the overflow hole (13).

9. Method according to one of claims 1 to 8, **characterized in that** at least one adhesive location (9) on the web (5) of the partition profile (4) is formed by an adapter plate (20) which is detachable from the partition profile (4), and the at least one adapter plate (20) is first adhesively bonded to the wall (2) by the first adhesive system (7), and the partition profile (4) with the second adhesive system (8) is fastened to the at least one adapter plate (20) after the initial strength of the first adhesive system (7) has been reached, and the partition (1) is fastened in the partition profile (4).

## Revendications

1. Procédé de montage d'une cloison de séparation (1) sur une cloison (2), dans lequel un profilé (4) de cloison de séparation est fixé par collage sur la cloison (2) et la cloison de séparation (1) est fixée dans le profilé (4) de cloison de séparation, dans lequel le profilé (4) de cloison de séparation porte la cloison de séparation (1), et dans lequel le profilé (4) de cloison de séparation est réalisé sous la forme d'un profilé ouvert comportant une âme (5) de laquelle fait saillie au moins une bride (6), dans lequel le profilé (4) de cloison de séparation est collé avec l'âme (5) sur la cloison (2) et la cloison de séparation (1) est fixée au profilé (4) de cloison de séparation dans la zone de la bride (6), dans lequel au moins deux systèmes de collage différents sont agencés sur le côté de l'âme (5) opposé à la bride (6), répartis sur la longueur (L) du profilé (4) de cloison de séparation, qui entrent en contact avec la cloison (2) lors de l'application du profilé (4) de cloison de séparation sur la cloison (2), dans lequel au moins deux points de collage (9) comportant un premier système de collage (7) sont prévus sur l'âme (5), répartis sur la longueur (L) du profilé (4) de cloison de séparation et espacés l'un de l'autre, et dans lequel un second système de collage (8) est prévu au moins sur une partie de la longueur restante du côté de l'âme (5) opposé à la bride (6), et le profilé (4) de cloison de séparation est collé à la cloison (2) avec le premier système de collage (7) et le second système de collage (8),
**caractérisé en ce que** le premier système de collage (7) présente, dans un délai de moins de 30 minutes, de préférence moins de 10 minutes, de manière particulièrement préférée immédiatement, une résistance initiale par laquelle le profilé (4) de cloison de séparation ainsi que la cloison de séparation (1) sont portés et maintenus sur la cloison (2), la cloison de séparation (1) est fixée dans le profilé (4) de cloison de séparation après avoir atteint la résistance initiale et le second système de collage (8) n'atteint sa résistance finale qu'après la fixation de la cloison de séparation (1) dans le profilé (4) de cloison de séparation, afin de conférer une résistance permanente à la liaison par collage entre le profilé (4) de cloison de séparation et la cloison (2).

2. Procédé selon la revendication 1, **caractérisé en ce qu'**un ruban adhésif (15) fixé à l'âme (5) comportant une surface adhésive s'éloignant du profilé (4) de cloison de séparation est utilisé comme premier système de collage (7) d'au moins un point de collage (9), dans lequel le ruban adhésif (15) est collé à la cloison (2) par la surface adhésive.

3. Procédé selon la revendication 2, **caractérisé en ce qu'**une bande d'étanchéité (16) est agencée autour d'au moins une partie de la périphérie du ruban adhésif (15), de préférence autour de toute la périphérie du ruban adhésif (15).

4. Procédé selon la revendication 3, **caractérisé en ce que** la bande d'étanchéité (16) présente une surface adhésive s'écartant du profilé (4) de cloison de séparation, avec laquelle la bande d'étanchéité (16) est collée à la cloison (2).

5. Procédé selon la revendication 1, **caractérisé en ce que** le premier système de collage (7) d'au moins un point de collage (9) est réalisé sous forme de colle à deux composants.

6. Procédé selon la revendication 5, **caractérisé en ce qu'**une bande adhésive de coffrage (10) fixée à l'âme (5) comportant une surface adhésive s'écartant du profilé (4) de cloison de séparation et un évidement de colle (11) central est utilisée en au moins un point de collage (9), dans lequel la bande adhésive de coffrage (10) entoure l'évidement de colle (11) sur toute la périphérie et la bande adhésive de coffrage (10) est collée avec la surface adhésive sur la cloison (2) et la colle à deux composants est remplie dans l'évidement de colle (11), de sorte que la colle à deux composants remplit au moins partiellement l'évidement de colle (11) et arrive en contact avec la cloison (2).

7. Procédé selon la revendication 6, **caractérisé en ce que** l'évidement de colle (11) s'étend jusqu'à l'âme (5) et un alésage de remplissage (12) est agencé dans l'âme (5), et la colle à deux composants, après le collage de la surface adhésive de la bande adhésive de coffrage (10) sur la cloison (2), est remplie à travers l'alésage de remplissage dans l'évidement de colle (11).

8. Procédé selon la revendication 7, **caractérisé en ce qu'**au moins un alésage de débordement (13) est agencé dans l'âme (5) et la colle à deux composants est remplie dans l'évidement de colle (11) par le biais de l'alésage de remplissage (12) jusqu'à ce que la colle à deux composants sorte au niveau de l'alésage de débordement (13).

9. Procédé selon l'une des revendications 1 à 8, **caractérisé en ce qu'**au moins un point de collage (9) sur l'âme (5) du profilé (4) de cloison de séparation est formé par une plaque d'adaptateur (20), qui peut être détachée du profilé (4) de cloison de séparation et l'au moins une plaque d'adaptateur (20) est d'abord collée à la cloison (2) avec le premier système de collage (7) et le profilé (4) de cloison de séparation est fixé à l'au moins une plaque d'adaptateur (20) avec le second système de collage (8) après avoir atteint la résistance initiale du premier système de collage (7) et la cloison de séparation (1) est fixée dans le profilé (4) de cloison de séparation.
